# EUROPEAN PATENT APPLICATION

(11) **EP 4 768 174 A1**
(43) Date of publication of application: **01.07.2026**
(21) Application number: 25202778.4
(22) Date of filing: 17.09.2025
(51) Int. Cl.: B23Q 11/00, B23Q 17/24

(54) **MACHINE TOOL**

(30) Priority: 31.12.2024 TW 113151797
(71) Applicant: Everinn International Co., Ltd., Taichung City 40760 (TW)
(72) Inventor: WU, Tsung-Hsin, 40760 Taichung City (TW)
(74) Representative: V.O.

(57) **Abstract**

A machine tool includes a machine housing unit (2), a cutting tool (31) disposed on the machine housing unit (2) for performing machining on a workpiece (7), a fixture unit (4) disposed on the machine housing unit (2), a monitoring system (5), and a filtration system (6). The fixture unit (4) has a main air entry hole (431) adjacent to the workpiece (7), and a first air outlet hole (411) in communication with the main air entry hole (431). The monitoring system (5) monitors a dimension of the cutting tool (31). The filtration system (6) is connected to the first air outlet hole (411), is adapted for providing a negative pressure to draw air from the workpiece (7) to the first air outlet hole (411) via the main air entry hole (431), and is adapted for filtering and discharging the air.

## Description

The disclosure relates to a machine tool, and more particularly to a machine tool that includes a filtration system and that instantly monitors a size of a cutting tool.

In general, during a machining process performed by a conventional machine tool, a cutting tool and a workpiece are rotated and moved relative to each other, thereby increasing temperatures of the cutting tool and the workpiece. In order to prevent a rising temperature from causing damage to the workpiece during the machining process, cutting fluids are sprayed during the machining process. The cutting fluids may lower the temperature during the machining process, and chips may be washed off a work table, so quality of machining may be maintained.

However, after each machining process, the cutting tool is inevitably worn and therefore has a size different from an original size thereof. If a subsequent machining process proceeds along a previous path, a size of a finished product may be off. Furthermore, the cutting liquids may splash, thereby making a work area dirty, and particles or chips from the machining process may cause pollution. As a result, monitoring of the cutting tool and the workpiece may be adversely affected by the particles or the chips resulting from the machining process. There is room for improvement of the conventional machine tool so as to increase a product yield rate and to reduce pollution.

Therefore, an object of the disclosure is to provide a machine tool that can alleviate at least one of the drawbacks of the prior art.

According to an aspect, there is provided a machine tool according to claim 1.

Other features and advantages of the disclosure will become apparent in the following detailed description of the embodiment(s) with reference to the accompanying drawings. It is noted that various features may not be drawn to scale.
Figure 1 is a perspective view illustrating a machine tool according to an embodiment of the disclosure.
Figure 2 is a perspective view of the embodiment illustrating a machine housing unit, a fixture unit, and image-capturing devices of the machine tool for a workpiece.
Figure 3 is a top view of Figure 2.
Figure 4 is a schematic sectional view taken along line IV-IV of Figure 3.
Figure 5 is a schematic sectional view taken along line V-V of Figure 4.
Figure 6 is a schematic sectional view taken along line VI-VI of Figure 4.
Figure 7 is a schematic sectional view taken along line VII-VII of Figure 4.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

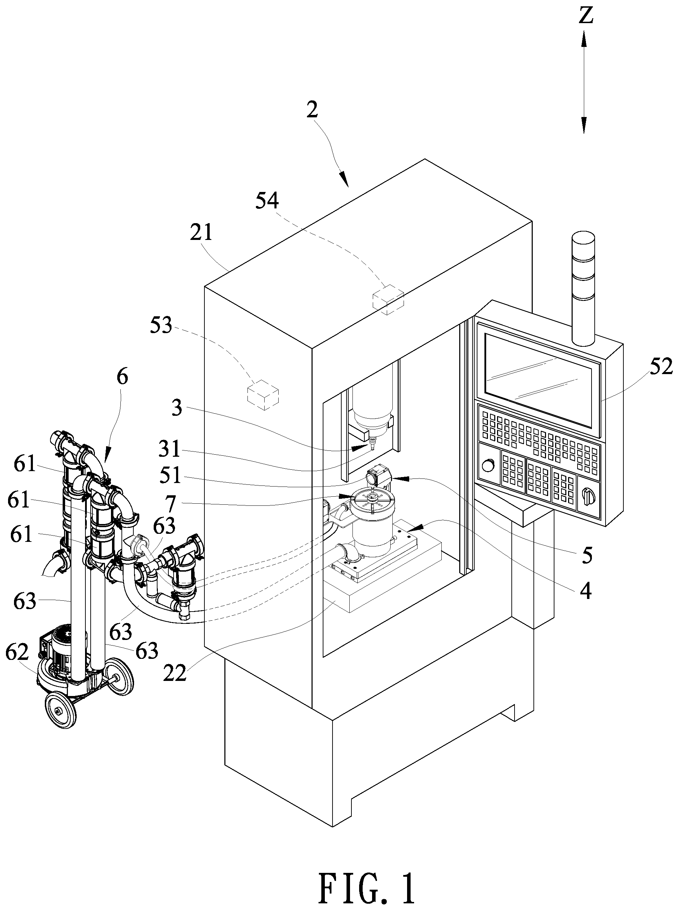

Referring to Figures 1 to 3, a machine tool according to an embodiment of the disclosure is adapted for performing machining on a workpiece 7. The machine tool includes a machine housing unit 2, a machining unit 3, a fixture unit 4, a monitoring system 5, and a filtration system 6.

The machine housing unit 2 includes a machine housing 21 and a work platform 22 movably disposed in the machine housing 21.

The machining unit 3 includes a cutting tool 31 movably disposed on the machine housing unit 2 and adapted for performing machining on the workpiece 7. In this embodiment, the cutting tool 31 is disposed above the work platform 22 in a top-bottom direction (Z), and is moveable relative to the work platform 22. Cutting fluids (not shown) are provided to the cutting tool 31.

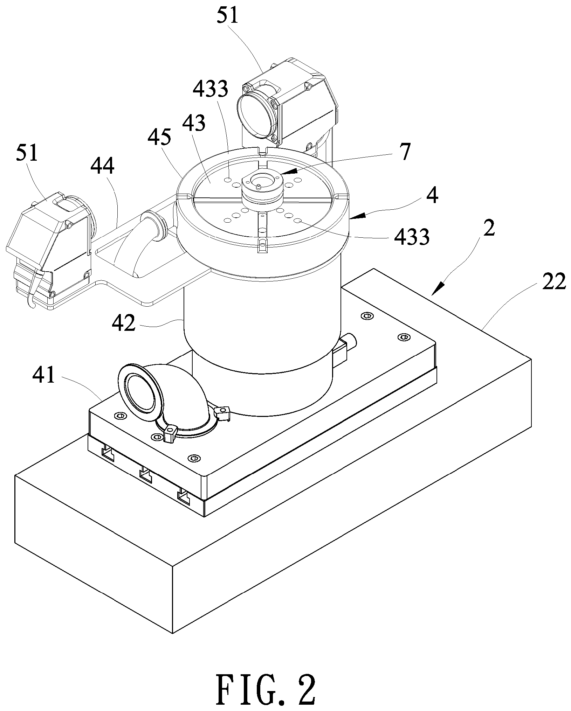

As shown in Figures 2, 3, and 4, the fixture unit 4 is disposed on the machine housing unit 2, is movable relative to the cutting tool 3, and is adapted for securing the workpiece 7 thereon. The fixture unit 4 includes a base seat 41, a support seat 42, an air-drawing seat 43, an extension seat 44, and an outer ring seat 45.

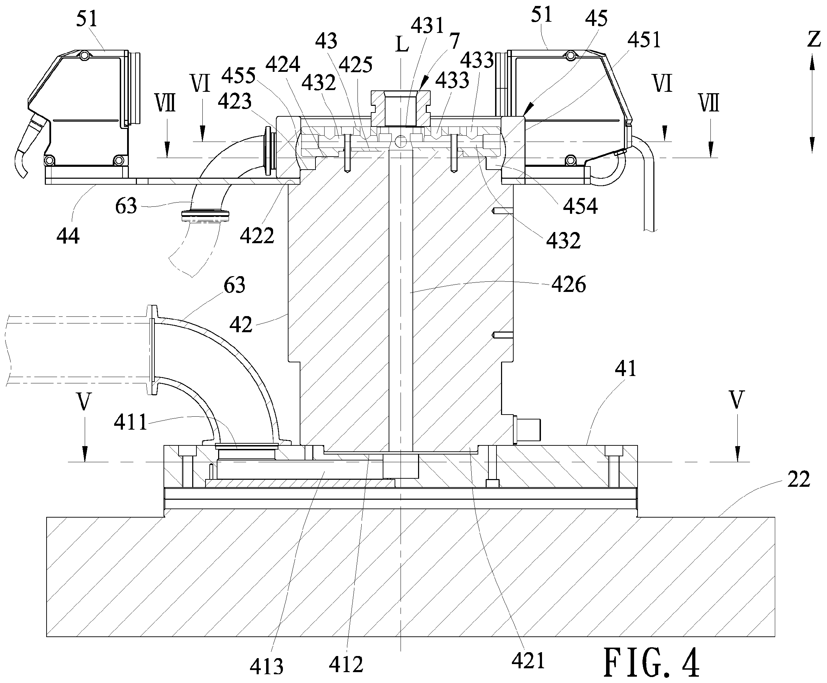

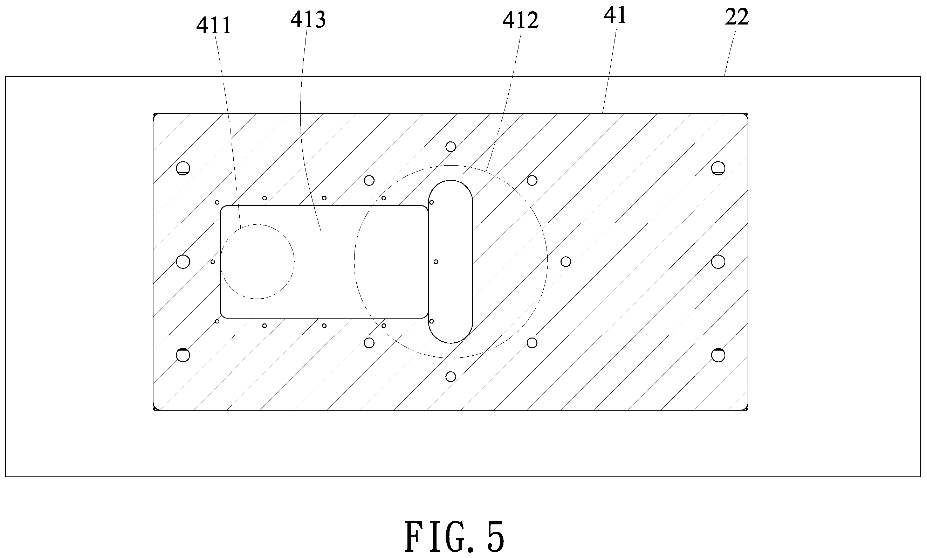

With reference to Figures 4 and 5, the base seat 41 is disposed on the work platform 22. In this embodiment, the base seat 41 has a first air outlet hole 411, a positioning groove 412, and an air introducing channel 413. The first air outlet hole 411 is formed on a top surface of the base seat 41 and has a circular shape. The positioning groove 412 is formed on the top surface of the base seat 41, is spaced apart from the first air outlet hole 411, and has a circular shape. The air introducing channel 413 is formed on a bottom surface of the base seat 41 and is in communication with the first air outlet hole 411 and the positioning groove 412. An area of the positioning groove 412 is greater than an area of the first air outlet hole 411. A portion of an area of a projection of the air introducing channel 413 on an imaginary plane perpendicular to the top-bottom direction (Z) overlaps areas of projections of the first air outlet hole 411 and the positioning groove 412 on the imaginary plane. In other embodiments, there may be, but not limited to, two or more than two first air outlet holes 411. There may be, but not limited to, a plurality of air introducing channels 413 in communication with each other.

The support seat 42 has a cylindrical shape, and is disposed between the base seat 41 and the air-drawing seat 43 (details of the air-drawing seat 43 will be described below). The positioning groove 412 of the base seat 41 is engaged with the support seat 42. In this embodiment, the support seat 42 has an engaging portion 421, a first annular surface 422, a second annular surface 423, a third annular surface 424, a fourth annular surface 425, and a communication channel 426. The engaging portion 421 protrudes downwardly into the positioning groove 412. The first annular surface 422, the second annular surface 423, the third annular surface 424, and the fourth annular surface 425 are spaced apart from each other in the top-bottom direction (Z) and are concentric with each other. A diameter of the first annular surface 422 is greater than a diameter of the second annular surface 423. The diameter of the second annular surface 423 is greater than a diameter of the third annular surface 424. The diameter of the third annular surface 424 is greater than a diameter of the fourth annular surface 425. The communication channel 426 extends through the fourth annular surface 425 and the engaging portion 421 in the top-bottom direction (Z). The positioning groove 412 of the base seat 41 is in communication with the communication channel 426 of the support seat 42 such that the first air outlet hole 411 and the air introducing channel 413 of the base seat 41 are in communication with the communication channel 426.

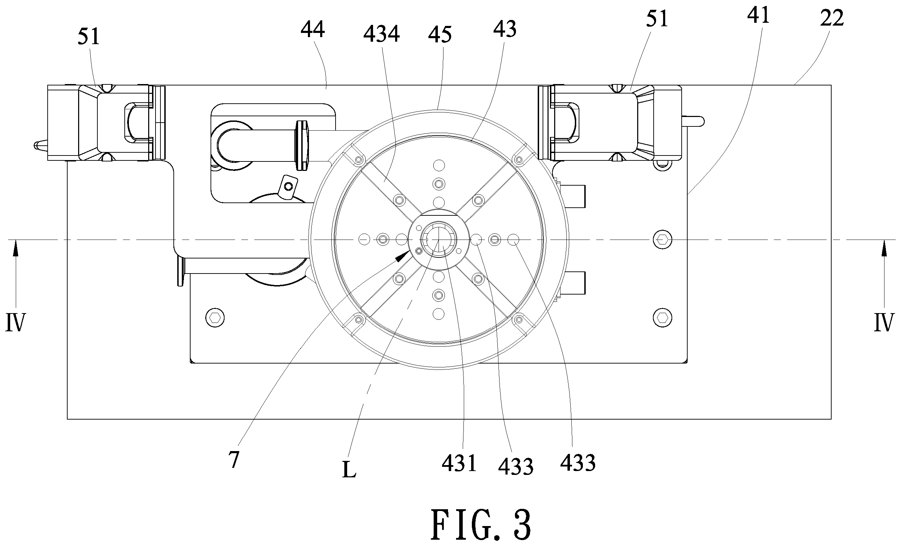

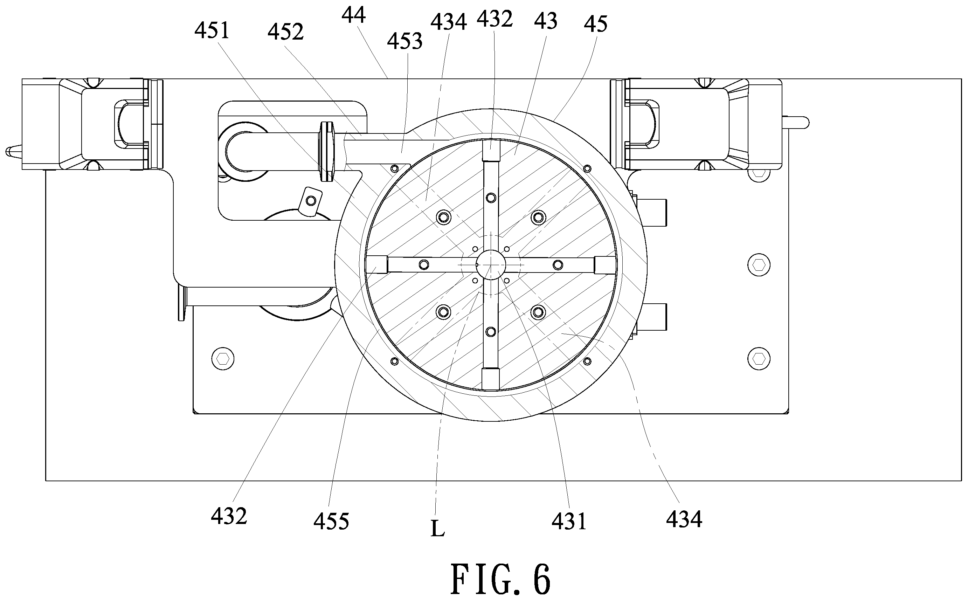

Referring to Figures 3, 4, and 6, the air-drawing seat 43 is abutted against the third annular surface 424 and the fourth annular surface 425 of the support seat 42, and is adapted for placement of the workpiece 7 thereon. An outer periphery of the air-drawing seat 43 protrudes outwardly from the third annular surface 424 and is spaced apart from the second annular surface 423. The air-drawing seat 43 has a main air entry hole 431, a plurality of extension holes 432, a plurality of auxiliary air entry holes 433, and a plurality of holding grooves 434. The main air entry hole 431 extends through the air-drawing seat 43 along an axis (L) that extends in the top-bottom direction (Z), opens toward an external environment, and is adapted to be adjacent to the workpiece 7. The plurality of extension holes 432 are angularly spaced apart from each other about the axis (L), and are transverse to the axis (L). Each of the plurality of extension holes 432 extends from the main air entry hole 431 and has an open end that is opposite to the main air entry hole 431. The plurality of auxiliary air entry holes 433 are formed on a top surface of the air-drawing seat 43 and are in communication with the extension holes 432. The plurality of holding grooves 434 are formed on the top surface of the air-drawing seat 43 and are angularly spaced apart from each other about the axis (L). In this embodiment, the communication channel 426 is in communication with the main air entry hole 431, and is in communication with the first air outlet hole 411 via the positioning groove 412 and the air introducing channel 413, so the first air outlet hole 411 is in communication with the main air entry hole 431. The plurality of holding grooves 434 allow disposition of a clamping device (not shown) for securing the workpiece 7.

Referring to Figures 4, 6, and 7, the extension seat 44 is connected to the support seat 42. In this embodiment, the extension seat 44 has a shape of a plate and is disposed on the first annular surface 422 of the support seat 42. The extension seat 44 has a clamped portion that is clamped between the support seat 42 and the outer ring seat 45 (details of the outer ring seat 45 will be described below), and an extension portion that is connected to the clamped portion and extends away from the support seat 42.

The outer ring seat 45 is disposed on the support seat 42 and surrounds the air-drawing seat 43. A bottom end of the outer ring 45 is abutted against the clamped portion of the extension seat 44 so as to secure the extension seat 44 to the support seat 42. The outer ring 45 has a main ring body 451, a tubular body 452 extending outwardly from the main ring body 451, and a second air outlet hole 453 extending through the main ring body 451 and the tubular body 452. The main ring body 451, the support seat 42, and the air-drawing seat 43 cooperatively define an annular space 454 that surrounds the axis (L), and the second air outlet hole 453 is in communication with the annular space 454. The main ring body 451 has an inner surface curved away from the axis (L). The annular space 454 has a gap region 455 that is disposed between the inner surface of the main ring inner body 41 and the air-drawing seat 43 and that is in communication with the extension holes 432 of the air-drawing seat 43.

With reference to Figures 1, 2, and 4, the monitoring system 5 monitors a dimension of the cutting tool 31, thereby controlling a machining path of the cutting tool 31. The monitoring system 5 includes two image-capturing devices 51, a controlling unit 52, a monitoring device 53, and an air quality monitoring device 54. The two image-capturing devices 51 are disposed on the extension seat 44, face each other, and are operable for capturing images of the cutting tool 31. The controlling unit 52 is electrically connected to the image-capturing devices 51. The monitoring device 53 is disposed in the machine housing 21 and is signally connected to the controlling unit 52. The air quality monitoring device 54 is disposed in the machine housing 21 and is signally connected to the controlling unit 52. The controlling unit 52 is adapted to process the images of the cutting tool 31 captured by the image-capturing devices 51 so as to control movements of the cutting tool 31. Specifically, the controlling unit 52 includes a storage module (not shown) that stores standard images (not shown) relative to the cutting tool 31, and a processor module (not shown) that is electrically connected to the storage module. By comparing the images of the cutting tool 31 captured by the image-capturing devices 51 with the standard images relative to the cutting tool 31, the processor module (not shown) computes differences between the images of the cutting tool 31 captured by the image-capturing devices 51 and the standard images relative to the cutting tool 31, thereby controlling the movements of the cutting tool 31 based on error compensation for an amount of abrasion of the cutting tool 31. The storage module may store and record a machining process. The monitoring system 5 may replace an optical encoder. The monitoring device 53 captures machining images so the storage module may store the machining images. The air quality monitoring device 54 is operable to monitor air quality in the machine housing 21. The objects monitored by the air quality device 54 may be suspended particulates, volatile gases, carbon dioxide, etc. The result of the air quality in the machine housing 21 monitored by the air quality monitoring device 54 may be stored in the storage module.

The filtration system 6 is connected to the first air outlet hole 411 and the second air outlet hole 453, is adapted for providing a negative pressure to draw air from the workpiece 7 to the first air outlet hole 411 via the main air entry hole 431, and is adapted for filtering and discharging the air. In this embodiment, the filtration system 6 includes a plurality of filter devices 61, a blower 62, and a plurality of pipe members 63. The blower 62 is operable for generating the negative pressure. The plurality of pipe members 63 interconnect the plurality of filter devices 61, the blower 62, the first air outlet hole 411, and the second air outlet hole 453. When the blower 62 generates the negative pressure, the air drawn from the first air outlet hole 411 and the second air outlet hole 453 is filtered by the filter devices 61, and then is discharged.

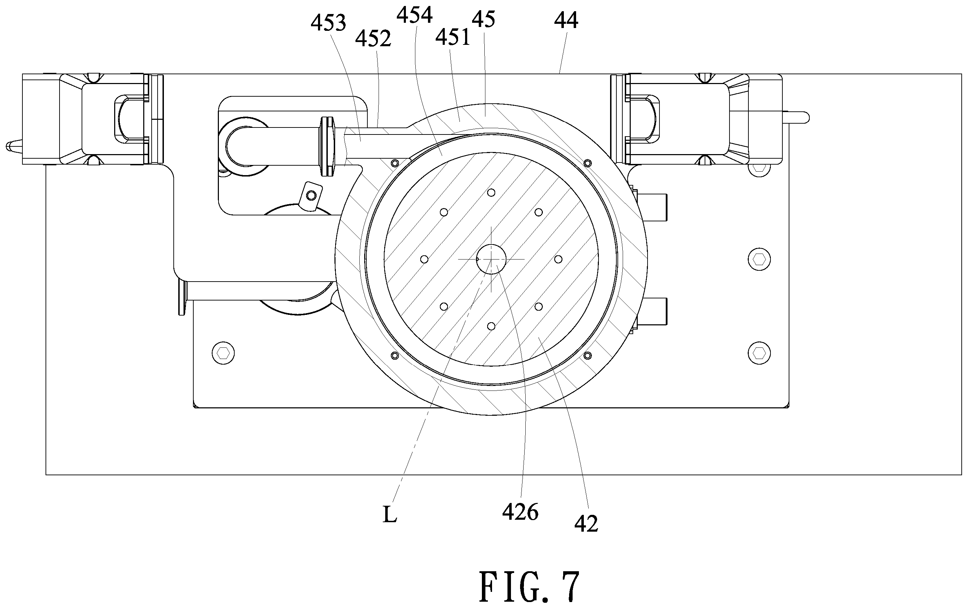

Before the machining process, image comparison of the cutting tool 31 may be first generated by the image-capturing device 51, so the machining path of the cutting tool 31 may be compensated by the processor module (not shown) based on the amount of abrasion of the cutting tool 31. Sequentially, the workpiece 7 is positioned to the air-drawing seat 43 such that the bottom surface of the workpiece 7 faces the main air entry hole 431. When machining is being performed on the inner surface of the workpiece 7, cutting liquids are mixed with the air, machined chips, and dirt, which are sucked into the filtration system 6 through the main air entry hole 431, the communication channel 426, the positioning groove 412, the air introducing channel 413, and the first air outlet hole 411. Fluids that are mixed with the machined chips and dirt surrounding the workpiece 7 and that do not pass through the main air entry hole 431 go through the plurality of auxiliary air entry holes 433, the extension holes 432, the gap region 455, and the annular space 454, and pass through the second air outlet hole 453 (see Figure 7) into the filtration system 6. The mixtures of liquids mixed with the air, machined chips, and dirt are first filtered by some of the filter devices 61 before passing through the blower 62, so that the mixtures are relatively clean and are discharged from the other filter devices 61 after passing through the blower 62. As a result, a machining area may remain clean, and the image-capturing devices 51 may be prevented from becoming dirty. In addition, because the mixture of liquids mixed with the air, machined chips, and dirt are filtered by and discharged from the filtration system 6, net-zero carbon emissions or carbon negative emissions may be achieved. The air filtered by and discharged by the filtration system 6 may even drive a wind turbine (not shown) for electricity generation.

In comparison with the conventional machine tool, because the monitoring system 5 monitors the dimension of the cutting tool 31, the machining path of the cutting tool 31 is controlled to prevent the amount of abrasion of the cutting tool 31 from causing an inaccurate machining size of the workpiece 7. Furthermore, by virtue of the blower 62 cooperating with the fixture unit 4 to reduce dirt and pollution of the machining area, the image-capturing devices 51 are prevented from monitoring errors caused by foreign objects existed between the image-capturing devices 51, thereby increasing monitoring accuracy. In addition, because the mixtures of the cutting liquids, the air, and the machined chips are filtered by and discharged from the filter devices 61, product yields may be increased and pollution may be reduced.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A machine tool adapted for performing machining on a workpiece (7), said machine tool including:
a machine housing unit (2);
a machining unit (3) that includes a cutting tool (31) movably disposed on said machine housing unit (2) and adapted for performing machining on the workpiece (7);
**characterized in that** said machine tool further includes:
a fixture unit (4) that is disposed on said machine housing unit (2), that is movable relative to said cutting tool (3), and that is adapted for securing the workpiece (7) thereon, said fixture unit (4) having
a main air entry hole (431) that opens toward an external environment and that is adapted to be adjacent to the workpiece (7), and
at least one first air outlet hole (411) that is in communication with said main air entry hole (431);
a monitoring system (5) that monitors a dimension of said cutting tool (31), thereby controlling a machining path of said cutting tool (31); and
a filtration system (6) that is connected to said at least one first air outlet hole (411), that is adapted for providing a negative pressure to draw air from the workpiece (7) to said first air outlet hole (411) via said main air entry hole (431), and that is adapted for filtering and discharging the air.

2. The machine tool as claimed in claim 1, wherein said fixture unit (4) includes
a base seat (41) that has said at least one first air outlet hole (411), and
an air-drawing seat (43) that is adapted for placement of the workpiece (7) thereon, and that has said main air entry hole (431) extending therethrough in a top-bottom direction (Z).

3. The machine tool as claimed in claim 2, wherein:
said fixture unit (4) further includes a support seat (42) that is disposed between said base seat (41) and said air-drawing seat (43); and
said support seat (42) has a communication channel (426) that extends therethrough in the top-bottom direction (Z) and that is in communication with said main air entry hole (431) and said at least one first air outlet hole (411).

4. The machine tool as claimed in claim 3, wherein:
said fixture unit (4) further includes an extension seat (44) that is connected to said support seat (42); and
said monitoring system (5) includes two image-capturing devices (51) that are disposed on said extension seat (44), that face each other, and that are operable for capturing images of said cutting tool (31).

5. The machine tool as claimed in any one of claims 3 to 4, wherein:
said fixture unit (4) further includes an outer ring seat (45) that is disposed on said support seat (42) and that surrounds said air-drawing seat (43);
said outer ring seat (45), said support seat (42), and said air-drawing seat (43) cooperatively define an annular space (454); and
said outer ring seat (45) has a second air outlet hole (453) that is in communication with said annular space (454).

6. The machine tool as claimed in claim 3, wherein said base seat (41) has
a positioning groove (412) that is formed on a top surface of said base seat (41), that is engaged with said support seat (42), and that is in communication with said communication channel (426) of said support seat (42), and
an air introducing channel (413) that is in communication with said at least one first air outlet hole (411) and said positioning groove (412).

7. The machine tool as claimed in claim 6, wherein said support seat (42) further has an engaging portion (421) that protrudes downwardly into said positioning groove (412).

8. The machine tool as claimed in any one of claims 2 to 7, wherein:
said main air entry hole (431) of said air-drawing seat (43) extends along an axis (L) that extends in the top-bottom direction (Z); and
said air-drawing seat (43) further has
a plurality of extension holes (432) that are angularly spaced apart from each other about the axis (L), and that are transverse to the axis (L), each of said plurality of extension holes (432) extending from said main air entry hole (431) and having an open end that is opposite to said main air entry hole (431), and
a plurality of auxiliary air entry holes (433) that are formed on a top surface of said air-drawing seat (43) and that are in communication with said extension holes (432).

9. The machine tool as claimed in any one of claims 4 to 8, wherein:
said monitoring system (5) further includes a controlling unit (52) that is electrically connected to said image-capturing devices (51); and
said controlling unit (52) is adapted to process the images of said cutting tool (31) captured by said image-capturing devices (51) so as to control movements of said cutting tool (31).

10. The machine tool as claimed in any one of claims 1 to 9, wherein:
said filtration system (6) includes
a plurality of filter devices (61),
a blower (62) that is operable for generating the negative pressure, and
a plurality of pipe members (63) that interconnect said plurality of filter devices (61), said blower (62), and said at least one first air outlet hole (411); and
when said blower (62) generates the negative pressure, the air drawn from said at least one first air outlet hole (411) is filtered by said plurality of filter devices (61), and then is discharged.
